# EUROPEAN PATENT SPECIFICATION

(11) **EP 2 800 332 B1**
(45) Date of publication and mention of the grant of the patent: **04.07.2018**
(21) Application number: 13290100.0
(22) Date of filing: 02.05.2013
(51) Int. Cl.: H04L 29/06, H04L 29/08, G06Q 30/02, H04N 21/25, H04N 21/466, H04N 21/482, H04N 21/658

(54) **Seamlessly enabling privacy in online recommendation services**
Nahtlose Ermöglichung von Datenschutz in Online-Empfehlungsdiensten
Activation en continu de la confidentialité dans des services de recommandation en ligne

(43) Date of publication of application: 05.11.2014
(73) Proprietor: Alcatel Lucent, 91620 Nozay (FR)
(72) Inventor: Nandi, Animesh, 560045 Bangalore (IN); Choudhary, Abhishek, 560045 Bangalore (IN)
(74) Representative: Berthier, Karine

(56) References cited:
- WO-A1-2012/146508
- US-A1- 2008 306 807

## Description

### FIELD OF INVENTION

The present subject matter relates to communication systems and, particularly but not exclusively, to privacy protection of end users in online recommendation services.

### BACKGROUND

End users accessing content, provided by content providers, are often provided assistance by the content providers in making a selection of content. Conventionally known techniques, such as content based recommendation and collaborative recommendation, are used to generate recommendations to enable such selection by the end users. In content based recommendation, the end users are recommended content, services or products which are similar to the content, services or products used or liked by the end users in the past or which match the interest or choice of the end user. In collaborative recommendation, the end user is recommended content, services or products which are similar to the content, services or products used or liked by other end users having similar or same interest or choices.

The conventional techniques, such as content based recommendation and collaborative recommendation, implemented by the content provider may involve collection of information related to personal preferences, choices, etc., of the end users. Conventionally, the content providers monitor and collect information pertaining to the end users through various means, such as by analyzing log files, application history files or other personally identifiable information saved on the end user's client device. In another conventional technique, the content provider may save a text file, such as a Hyper Text Transfer Protocol (HTTP) cookie to collect information pertaining to an end user.

US 2008/0306807 discloses a way of selecting a streaming media to advertise to a user based on a user interest profile generated from a plurality of ratings input by the user when viewing other streaming media.

### SUMMARY

This summary is provided to introduce concepts related to privacy protection of end users in recommendation services. This summary is not intended to identify essential features of the claimed subject matter nor is it intended for use in determining or limiting the scope of the claimed subject matter.

According to an embodiment of the present subject matter, a privacy protection system comprises of a privacy protection middleware (PPM) system and at least one client device, for privacy protection of end users in online recommendation services. The PPM system comprises a processor and an over the top (OTT) emulation module" coupled to the processor, to emulate an OTT application used by a group of a pre-defined number of end users having similar interests. The OTT emulation module registers a profile of a pseudo end user, who represents the group, with a content provider of the OTT application and transmits the popular consumption of the group as the consumption of the pseudo end user. A recommendation relay module, coupled to the processor, receives recommendations of content, for the pseudo end user, from the content provider.

According to another embodiment of the present subject matter, a method for privacy protection of end users in online recommendation services, comprises emulating an OTT application used by a group of a pre-defined number of end users having similar interests and registering a profile of a pseudo end user, who represents the group, with a content provider of the OTT application. The method further comprises transmitting the popular consumption of the group as the consumption of the pseudo end user and receiving recommendations of content, for the pseudo end user, from the content provider.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 illustrates a network environment implementation of a privacy protection system for recommendation services, in accordance with an embodiment of the present subject matter;
Figure 2 illustrates a method for privacy protection in recommended services, in accordance with an embodiment of the present subject matter; and
Figure 3 illustrates a method for privacy protected recommended services, in accordance with another embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DETAILED DESCRIPTION

Systems and methods related to privacy protection of end users in recommendation services are described herein. In one embodiment, the present subject matter discloses a system and a method for privacy protection to protect confidential and personal information of the end users using their client devices to avail services or view content recommended by a content provider through a network.

In a commercially implemented technique, a privacy protection system for recommendation services, which includes a plurality of client devices and a privacy protection middleware (PPM) system communicatively coupled to the client devices, is used for privacy preservation. In said technique, a profile generation module is installed in the client device of the end user which interacts with various applications through application programming interfaces (APIs) to determine the personal choices and preferences of the end users. A group identity computation module running on the client device of the end user analyzes the preferences, by comparing it to a pre-defined mapping of groups and preferences, to determine a probable group which an end user may pertain to. The group identity computation module transmits the interest profile of the end user to the privacy protection middleware (PPM) system using various techniques, such as profile slicing technique, to ensure anonymity of the end user with respect to the PPM system.

The PPM system anonymously aggregates the interests of all the end users who pertain to a particular group and determines the most popular content, product or services within the group. The PPM system is connected to one or more content/service providers, either directly or over a network. In one example, the PPM system communicates the most popular interests of one or more interest groups (i.e. groups of similar users as determined by the PPM system) to the content/service provider. In response, the content/service provider may return a list of recommendations for contents or products or services, etc. for each interest group. The recommendations obtained by the PPM system are conveyed to the members of each interest group. An example of such a technique is provided in WO 2012/146508.

However, the aforementioned techniques involve the end users migrating to the applications associated with the privacy protection system. End users are usually reluctant to try out new privacy protection variant versions of Over-the-Top (OTT) applications and prefer to continue using the existing OTT applications, such as GoogleReader™ and YouTube™, with which they are comfortable. Further, end users may also be concerned about whether the recommendation generation techniques of the privacy protection system are as evolved and accurate as those of the content provider.

Moreover, an end user may use various OTT applications for different purposes, such as a news reader application for URL recommendations, a multimedia application for video recommendations, a "check-in" based social networking application for located-based services recommendations, and a video application for movie recommendations. Developing privacy protection variant versions of different OTT applications for a plethora of existing recommendation services is time-consuming as well as expensive and thus, may not be practically feasible.

In one possible technique to address the aforementioned issues, the content provider may partner with developers of privacy protection systems to leverage APIs that the privacy protection systems may expose to these OTT applications to push recommendations into the privacy protection systems while preserving the privacy of end-end users. However, developing such APIs that enables privacy of end-end users from the content provider, which at the same time enables the end-end user to leverage recommendations from the content provider, is a challenging task.

The present subject matter discloses methods and systems for privacy protection of the end users using client devices to avail recommendation services i.e. recommendations to avail personalized or customized content, services or products provided by a content provider either directly or through a network. The systems and methods can be implemented in a variety of computing devices. In one embodiment, a privacy protection system for recommendation services includes a plurality of client devices and a privacy protection middleware system.

In one example, a data traffic interception module runs on the client device. The data traffic interception module seamlessly intercepts data packets by the OTT application to the content provider and re-routes portions of the data that are privacy compromising to an user profile generation module running on the client device. In one implementation, the data traffic interception module may intercept data packets which form a part of HTTP POST requests as a majority of OTT applications use HTTP POST requests to transmit information pertaining to the likes, dislikes and subscriptions of the end user.

The user profile generation module analyzes the re-routed data and generates an interest profile of the end user. The user profile generation module further determines a probable group which an end user may pertain to by comparing the interest profile of the end user with a pre-defined mapping of groups and interest profiles. End users who have similar or same interests are categorized into the same group, identified by a group identity (id). In one example, the privacy protection middleware system may implement abstraction of a minimum number, denoted by k, of end users with similar or same interests and fetch the popular consumption of the group of k end users.

The privacy protection middleware system may then create an account with the content provider for emulating a pseudo end user, representing the group of k end users, whose consumption is the same as the popular consumption of the group. For example, the privacy protection middleware system may aggregate the HTTP POST requests representing the popular likes, dislikes and subscriptions of each of the end users of the group and transmit the same to the content provider. On receiving a response, in form of recommendations, from the content provider, the privacy protection middleware system relays the same to the OTT applications of the end users belonging to the group.

Thus, the aforementioned systems and methods for privacy protections facilitate the end user to use their existing OTT applications without compromising the privacy of the end users. Hence, the end users do not have to migrate from their existing OTT applications with which they are comfortable. Further, the end users receive the same recommendations from the content provider as they would have otherwise. Moreover, the privacy protection middleware system seamlessly integrates with content providers as the content providers continue to use their existing techniques and architecture to deliver recommendations.

The above systems and the methods are further described in conjunction with the following figures. It should be noted that the description and figures merely illustrate the principles of the present subject matter. Further, various arrangements may be devised that, although not explicitly described or shown herein, embody the principles of the present subject matter and are included within its spirit and scope.

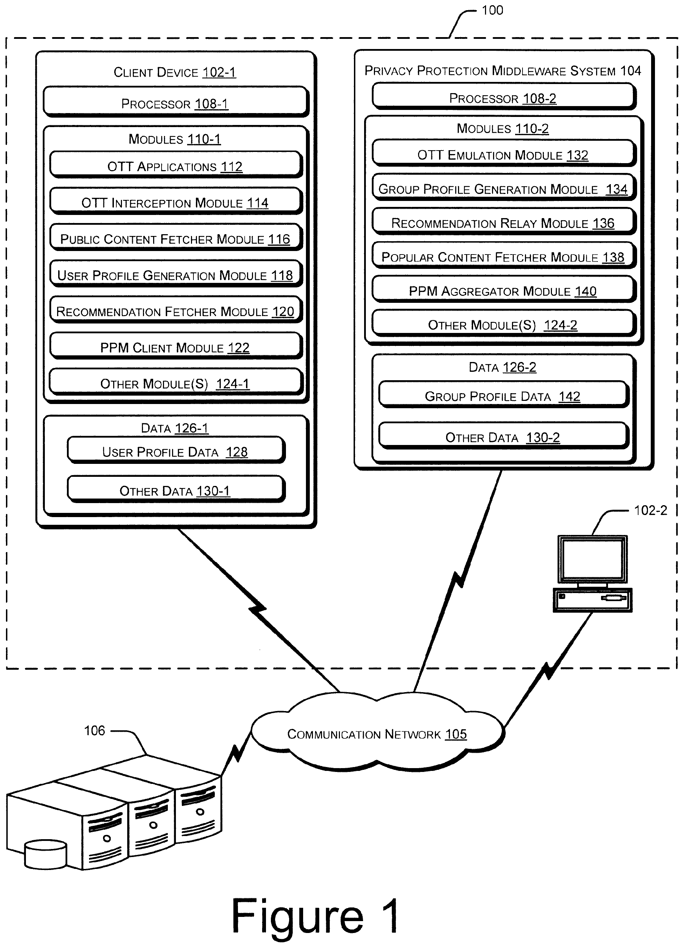

The manners in which the systems and methods for privacy protection of end users in online recommendation services are implemented are explained in details with respect to Figures 1, 2 and 3. While aspects of described systems and methods for privacy protection of end users in online recommendation services can be implemented in any number of different computing systems, environments, and/or implementations, the examples and implementations are described in the context of the following system(s).

Figure 1 schematically illustrates the components of a privacy protection system 100, according to an example of the present subject matter. In one example, the privacy protection system 100 comprises one or more client device 102-1 and 102-2, and a privacy protection middleware (PPM) system 104 communicatively coupled to the client devices 102-1 and 102-2. The client devices 102-1 and 102, collectively referred to as client devices 102, may be implemented as any commercially available computing system, such as a smart phone, laptop, personal computer and a smart television. The PPM system 104 may be implemented as various computing systems, such as a personal computer, a server and a network server. In one implementation, an end user uses the client device 102 to access convent provided by a content provider through one or more content provider servers 106. The content may include audio, video, games, location based services, news, articles and so on.

In one example, the client devices 102, the PPM system 104 and the content provider server 106 may be connected over a communication network 105. The communication network 105 may include a Global System for Mobile Communication (GSM) network, a Universal Mobile Telecommunications System (UMTS) network, or any other communication network that use any of the commonly used protocols, for example, Hypertext Transfer Protocol (HTTP) and Transmission Control Protocol/Internet Protocol (TCP/IP).

In one implementation, the client device 102 and the PPM system 104 include processors 108-1 and 108-2, respectively. The client device 102 and the PPM system 104 may each include a memory connected to the processors 108-1 and 108-2, respectively. Among other capabilities, the processors 108-1 and 108-2 may fetch and execute computer-readable instructions stored in the memory of the client device 102 and the PPM system 104, respectively. The memory can include any commercially available non-transitory computer-readable medium including, for example, volatile memory, and/or non-volatile memory.

In one implementation, the client device 102 and the PPM system 104 include modules 110-1 and 110-2(collectively referred to as modules 110) communicatively coupled to the processors 108-1 and 108-2, respectively. The modules 110-1 and 110-2, collectively referred to as modules 110, amongst other things, include routines, programs, objects, components, and data structures, which perform particular tasks or implement particular abstract data types. The modules 110 may also be implemented as, signal processor(s), state machine(s), logic circuitries, and/or any other device or component that manipulates signals based on operational instructions. Further, the modules 110 can be implemented by hardware, by computer-readable instructions executed by a processing unit, or by a combination thereof.

In one implementation, the modules 110-1 of the client device 102 include OTT application(s) 112, an OTT interception module 114, a public content fetcher module 116, a user profile generation module 118, a recommendation fetcher module 120, a PPM client module 122 and other modules 124-1. In one example, the modules 110-2 of the PPM system 104 include an OTT emulation module 132, a group profile generation module 134, a recommendation relay module 136, a popular content fetcher module 138, a PPM aggregator module 140 and other modules 124-2. The other module(s) 124-1 and 124-2 may include programs or coded instructions that supplement applications or functions performed by the client device 102 and the PPM system 104, respectively.

In an example, the client device 102 includes data 126-1. The data 126-1 may include a group map data 128 and other data 130-1. In another example, the PPM system 104 includes data 126-2. The data 126-2 includes group profile data 142 and other data 130-2. The other data 130-1 and 130-2 may include data generated and saved by the modules for providing various functionalities of the client device 102 and PPM system 104.

In operation, the end user may use OTT applications 112 to access and consume the content provided by content provider servers 106. The OTT interception module 114 running on the client device 102 seamlessly intercepts data packets by the OTT application 112 to the content provider server 106. In one example, the end user may provide his comments, ratings and feedback about content consumed by him. The end user may also subscribe to channels which generally provide content liked by him. Further, the OTT applications 112 may also fetch publically available content from the content provider server 106 for being displayed to the end user. Most OTT applications 112 communicate the end user's comments, ratings and feedback to the content provider servers 106 using HTTP POST requests and fetch publically available content using HTTP GET requests. The OTT interception module 114 intercepts any data sent as HTTP GET requests and transmits the same to the public content fetcher module 116. The public content fetcher module 116 retrieves the publically available content, based on the HTTP GET requests, and scans the same to remove any trackers, such as cookies. The scanned publically available content is then pushed to the OTT applications 112.

In said example, the OTT interception module 114 further intercepts any data sent as HTTP POST request and re-routes portions of the data that are privacy compromising to the user profile generation module 118 running on the client device 102. The user profile generation module 118 analyzes the re-routed data, generates an interest profile of the end user. In one example, the interest profile of the end user may be indicative of the preferences of the end user regarding varied services and content accessed through the OTT applications 112.

The user profile generation module 118 may then retrieve a pre-defined mapping of groups and interest profiles from group map data 128 and determine a probable group which an end user may pertain to, based on a comparison between the interest profile of the end user and the pre-defined mapping. Since the end user may use various OTT applications 112 for different services, the user profile generation module 118 may classify the end user into a different group for different services. The user profile generation module 118 may thus categorize end users who have similar or same interests into the same group, identified by a group identity (id).

The user profile generation module 118 further communicates the group id of the group in which the end user has been categorized for each service to the PPM client module 122. The PPM client module 122 anonymously transfers the group id of the end user to the PPM aggregator module 140, using techniques such as onion routing and profile slicing.

The PPM aggregator module 140 may obtain the group id of multiple end users. In one example, the PPM aggregator module 140 may implement abstraction of a minimum number, denoted by k, of end users with similar or same interests. Further, the popular content fetcher module 138 may analyze the data generated by the PPM aggregator module 140 and determine the popular consumption of the group of k end users. In one example, the popular content fetcher module 138 may implement techniques, such as popularity graphs, to determine the popular consumption of the group of k end users.

Based on the popular consumption of the group of k end users, the group profile generation module 134 may generate a profile of a pseudo end user who represents the group of k end users and consumes the popular content consumed by the group of k end users. In one example, the group profile generation module 134 saves the profile of the pseudo end user as group profile data 142.

The OTT emulation module 132 may then emulate the OTT application 112 and register with or create an account with the content provider server 106 using the profile of the pseudo end user representing the group of k end users. The OTT emulation module 132 may generate HTTP POST requests which are an aggregation of the HTTP POST requests representing the popular likes, dislikes and subscriptions of each of the end users of the group, and transmit the same to the content provider server 106. In response, the content provider server 106 may generate recommendations of content for the registered pseudo end user. In one example, the recommendation relay module 136 receives the recommendations of content generated for the registered pseudo end user and transmits it to the PPM aggregator module 140 for being pushed to the client device 102 of each of the end users of the group. In one example, the recommendation fetcher module 120 receives the pushed recommendations and transmits the same to the OTT applications 112 for being displayed to the end user.

Thus, the aforementioned systems and methods for privacy protections facilitate the end users to use their existing OTT applications 110 without compromising on the privacy of the end users. Further, the end users receive the same recommendations from the content provider server 106 as they would have otherwise. Moreover, the PPM system 104 seamlessly integrates with content provider servers 106 and thus, the content providers can continue to use their existing techniques and architecture to deliver recommendations.

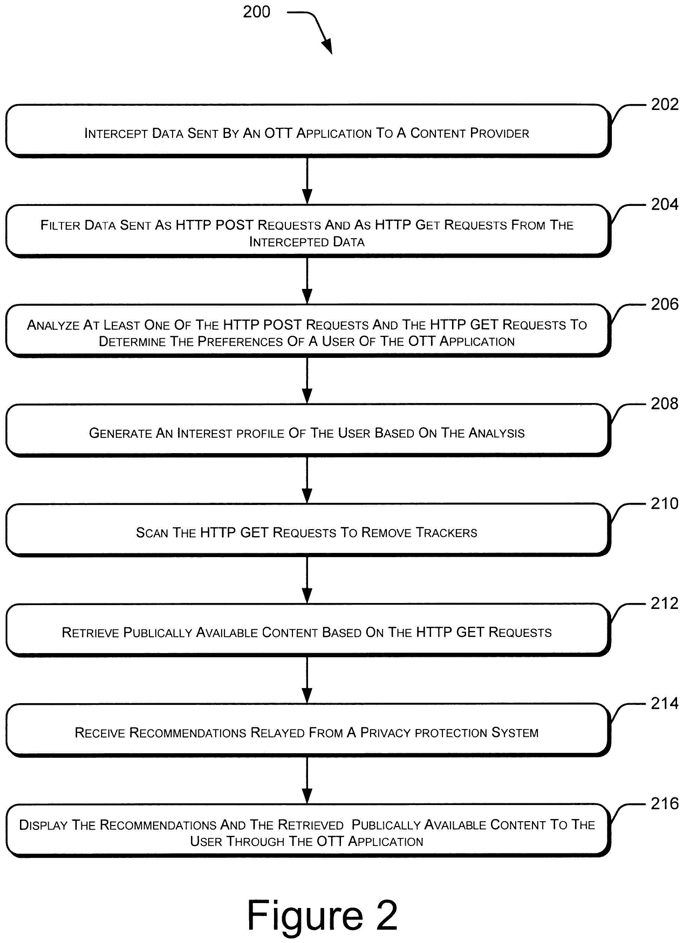

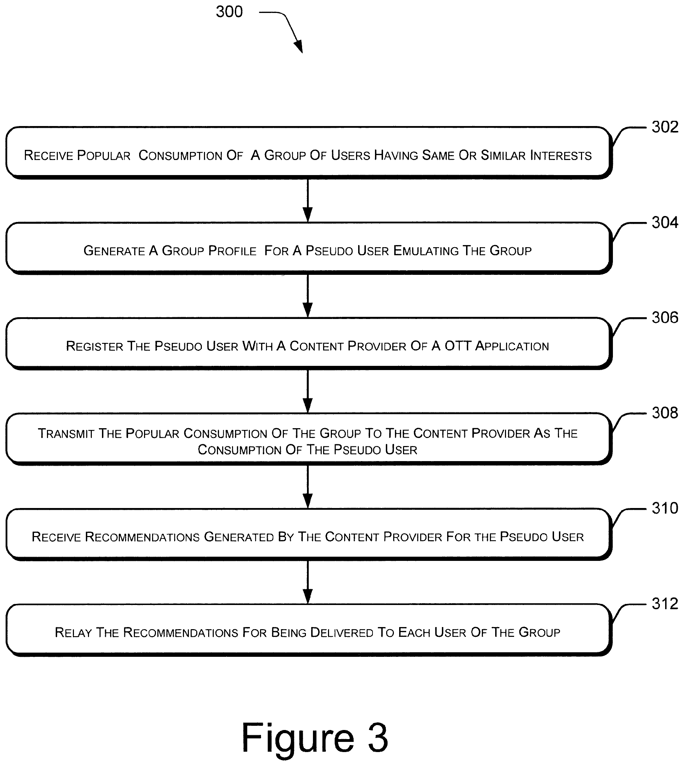

Figure 2 and 3 illustrate methods 200 and 300 for privacy protection in recommended services, according to an example of the present subject matter. The order in which the methods 200 and 300 are described is not intended to be construed as a limitation, and any number of the described method blocks can be combined in any order to implement the methods 200 and 300, or an alternative method. Additionally, individual blocks may be deleted from the methods 200 and 300 without departing from the spirit and scope of the subject matter described herein. Furthermore, the methods 200 and 300 may be implemented in any suitable hardware, computer-readable instructions, or combination thereof.

The steps of the methods 200 and 300 may be performed by either a computing device under the instruction of machine executable instructions stored on a storage media or by dedicated hardware circuits, microcontrollers, or logic circuits. Herein, some examples are also intended to cover program storage devices, for example, digital data storage media, which are machine or computer readable and encode machine-executable or computer-executable programs of instructions, where said instructions perform some or all of the steps of the described methods 200 and 300. The program storage devices may be, for example, digital memories, magnetic storage media, such as a magnetic disks and magnetic tapes, hard drives, or optically readable digital data storage media.

With reference to method 200 as shown in figure 2, at block 202, the data sent by an OTT application 112 to a content provider server 106 is intercepted. In one example, the OTT interception module 114 intercepts data transmitted by the OTT applications 112.

As depicted in block 204, the intercepted data is filtered as data sent as HTTP POST requests and data sent as HTTP GET requests. In one implantation, the OTT interception module 114 filters the intercepted data as data transmitted as HTTP POST requests and data transmitted as HTTP GET requests. Generally, the data transmitted as HTTP POST requests convey about the likes, dislikes and subscriptions of the end user, whereas data transmitted as HTTP GET requests convey about publically available content. The OTT interception module 114 transmits the data transmitted as HTTP POST requests to the user profile generation module 118 and the data transmitted as HTTP GET requests to the public content fetcher module 116.

As illustrated in block 206, the data sent as HTTP POST requests are analyzed to determine the preferences of an end user of the OTT application 112. In one example, the user profile generation module 118 analyzes the re-routed HTTP POST requests data to determine the preferences and likes of the end user.

As shown in block 208, an interest profile of the end user is generated based on the analysis. In one implementation, the user profile generation module 118 generates an interest profile of the end user based on the end user's likes and preferences. The interest profile of the end user is then transmitted to the PPM system 104 to obtain recommendation of content for the end user.

At block 210, publically available content is retrieved, based on the HTTP GET requests. In one example, the public content fetcher module 116 analyzes the data transmitted as HTTP GET requests to identify and retrieve the publically available content.

As illustrated in block 212, the publically available content is scanned to remove trackers. In one implementation, the public content fetcher module 116 scans the publically available content to remove trackers, such as HTTP cookies, which may be used to track or identify the end user.

As depicted in block 214, recommendations received from the content provider server are relayed from the PPM system 104. In one example, the recommendation fetcher module 120 obtains recommendations of content from the PMS system 104.

As shown in block 216, the recommendations and the scanned publically available content are displayed to the end user through the OTT applications 112. In one example, the OTT applications 112 obtain the publically available content from the public content fetcher module 116 and the recommended content from the recommendation fetcher module 120 and display the same to the end user.

With reference to method 300 as shown in figure 3, at block 302, the popular consumption of a group of end users having same or similar interests is received. In one example the popular content fetcher module 138 retrieves the popular content consumed by a group of k anonymous end users.

As shown in block 304, a group profile for a pseudo end user emulating the group is generated. In one example, the group profile generation module 134 generates an interest profile for a pseudo end user who is representative of the group of k anonymous end users and whose consumption is same as the popular content consumed by the group.

As depicted in block 306, the pseudo end user is registered with a content provider of the OTT application 112. In one example, the OTT emulation module 132 emulates the OTT application 112 and registers the pseudo end user with or creates an account of the pseudo end user with content provider server 106 of the content provider.

At block 308, the popular consumption of the group is transmitted to the content provider as the consumption of the pseudo end user. In one implementation, the OTT emulation module 132 transmits the popular content consumed by the group as the consumption of the pseudo end user to the content provider.

As shown in block 310, the recommendations generated by the content provider for the pseudo end user is received. In one example, the recommendation relay module 136 receives the recommendations generated by the content provider server 106 for the pseudo server.

At block 312, the recommendations are pushed for being relayed to each end user of the group. In one example, the PPM aggregator module 140 obtains the recommendations generated for the pseudo end user and pushes the same to each end user of the group represented by the pseudo end user.

Although implementations for privacy protection of end users in recommendation services have been described in language specific to structural features and/or methods, it is to be understood that the appended claims are not necessarily limited to the specific features or methods described. Rather, the specific features and methods are disclosed as examples of systems and methods for privacy protection of end users in recommendation services.

## Claims

1. A privacy protection system (100) comprising of a privacy protection middleware, PPM, system (104) and at least one client device (102), for privacy protection of end users in online recommendation services, the PPM system (104) comprising:
a processor (108-2);
an over the top, OTT, emulation module (132), coupled to the processor (108-2), to:
emulate an OTT application (112) used by a group of end users having similar interests;
register a profile of a pseudo end user, who represents the group, with a content provider of the OTT application (112); and
transmit the popular consumption of the group as the consumption of the pseudo end user; and
a recommendation relay module (136), coupled to the processor (108-2), to receive recommendations of content, for the pseudo end user, from the content provider; wherein
said client device displays said recommendations of content through the OTT application (112).

2. The privacy protection system (100) as claimed in claim 1, wherein the PPM system (104) further comprises a PPM aggregator module (140), coupled to the processor (108-2), to receive group identity, id, of the group of end users having similar interests.

3. The privacy protection system (100) as claimed in claim 2, wherein the PPM system (104) further comprises a popular content fetcher module (138), coupled to the processor (108-2), to determine the popular content consumed by the group.

4. The privacy protection system (100) as claimed in claim 2, wherein the PPM system (104) further comprises a group profile generation module (134), coupled to the processor (108-2), to generate the profile of the pseudo end user who represents the group.

5. The privacy protection system (100) as claimed in claim 1, wherein the at least one client device (102) comprises:
a processor(108-1);
an OTT interception module (114), coupled to the processor (108-1), to:
intercept data sent by the OTT application (112) to the content provider; and
filter the intercepted data as data transmitted through hyper text transfer protocol (HTTP) POST requests and as data transmitted through HTTP GET requests.

6. The privacy protection system (100) as claimed in claim 5, wherein the at least one client device (102) further comprises a public content fetcher module (114), coupled to the processor (108-1), to:
obtain the data transmitted through HTTP GET requests;
analyze the obtained data to determine publically available content;
retrieve the publically available content;
scan the retrieved publically available content to eliminate trackers; and
push the scanned publically available content to the OTT application (112) for being displayed to the end user.

7. The privacy protection system (100) as claimed in claim 5, wherein the at least one client device (102) further comprises a recommendation fetcher module (120), coupled to the processor (108-1), to :
fetch recommendations generated by the content provider from the PPM system (104); and
push the recommendations to the OTT application (112) for being displayed to the end user.

8. A method for privacy protection of end users in online recommendation services, comprising:
emulating over the top, OTT, application (112) used by a group of end users having similar interests;
registering a profile of a pseudo end user, who represents the group, with a content provider of the OTT application (112);
transmitting the popular consumption of the group as the consumption of the pseudo end user; and
receiving recommendations of content, for the pseudo end user, from the content provider; wherein
said client device displays said recommendations of content through the OTT application.

9. The method as claimed in claim 8, wherein the method further comprises:
receiving group identity, id, of the group of end users having similar interests; and
determining the popular content consumed by the group.

10. The method as claimed in claim 8, wherein the method further comprises generating the profile of the pseudo end user who represents the group.

## Patentansprüche

1. Datenschutzsystem (100), umfassend ein PPM-System (Privacy Protection Middleware) (104) und mindestens ein Client-Gerät (102) zum Datenschutz von Endbenutzern in Online-Empfehlungsdiensten, wobei das PPM-System (104) umfasst:
einen Prozessor (108-2);
ein OTT-Emulationsmodul (Over the Top) (132), das mit dem Prozessor (108-2) gekoppelt ist, um:
eine OTT-Anwendung (112) zu emulieren, die verwendet wird in einer Gruppe einer vordefinierten Anzahl von Endbenutzern, die ähnliche Interessen haben;
ein Profil eines Pseudo-Endbenutzers zu registrieren, der die Gruppe repräsentiert, mit einem Content-Anbieter der OTT-Anwendung (112); und
populären Konsum der Gruppe als Konsum des Pseudo-Endbenutzers zu übertragen; und
ein Empfehlungsweiterleitungsmodul (136), das mit dem Prozessor (108-2) gekoppelt ist, um Empfehlungen von Content zu erhalten für den Pseudo-Endbenutzer vom Content-Anbieter; wobei besagtes Client-Gerät besagte Empfehlungen von Content durch die OTT-Anwendung (112) anzeigt.

2. Datenschutzsystem (100) nach Anspruch 1, wobei das PPM-System (104) weiterhin umfasst ein PPM-Aggregatormodul (140), das gekoppelt ist mit dem Prozessor (108-2), um die Gruppenidentität, id, der Gruppe einer vordefinierten Anzahl von Endbenutzern zu empfangen, die ähnliche Interessen haben.

3. Datenschutzsystem (100) nach Anspruch 2, wobei das PPM-System (104) weiterhin umfasst ein Abrufmodul für populären Content (138), das mit dem Prozessor (108-2) gekoppelt ist, um den populären Content zu bestimmen, der von der Gruppe konsumiert wird.

4. Datenschutzsystem (100) nach Anspruch 2, wobei das PPM-System (104) weiterhin umfasst ein Gruppenprofil-Erzeugungsmodul (134), das mit dem Prozessor (108-2) gekoppelt ist, um das Profil des Pseudo-Endbenutzers zu erzeugen, der die Gruppe repräsentiert.

5. Datenschutzsystem (100) nach Anspruch 1, wobei das mindestens eine Client-Gerät (102) umfasst:
einen Prozessor (108-1);
ein OTT-Abfangmodul (114), das mit dem Prozessor (108-1) gekoppelt ist, um:
Daten abzufangen, die von der OTT-Anwendung (112) an den Content Anbieter gesendet wurde; und
die abgefangenen Daten als Daten zu filtern, die durch HTTP-POST-Anforderungen (Hyper Text Transfer Protocol) übertragen worden sind, und als Daten, die mittels HTTP GET Anforderungen übertragen worden sind.

6. Datenschutzsystem (100) nach Anspruch 5, wobei das mindestens eine Client-Gerät (102) weiterhin umfasst ein Abrufmodul für öffentlichen Content (114), das mit dem Prozessor (108-1) gekoppelt ist, um:
Daten zu erhalten, die mittels HTTP GET Anforderungen übertragen worden sind;
die erhaltenen Daten zu analysieren, um öffentlich verfügbaren Content zu bestimmen;
den öffentlich verfügbaren Content abzurufen;
den abgerufenen öffentlich verfügbaren Content zu Scannen, um Tracker zu eliminieren; und
den gescannten öffentlich verfügbaren Content an die OTT-Anwendung (112) zu senden, damit er dem Endbenutzer angezeigt werden kann.

7. Datenschutzsystem (100) nach Anspruch 5, wobei das mindestens eine Client-Gerät (102) weiterhin umfasst ein Empfehlungsabrufmodul (120), das mit dem Prozessor (108-1) gekoppelt ist, um:
Empfehlungen abzurufen, die von dem Content-Anbieter vom PPM-System (104) erzeugt werden; und
die Empfehlungen an die OTT-Anwendung (112) zu senden, damit sie dem Endbenutzer angezeigt werden.

8. Verfahren zum Datenschutz von Endbenutzern in Online-Empfehlungsdiensten, umfassend:
Emulieren einer OTT-Anwendung (Over the Top) (112), die verwendet wird von einer Gruppe einer vordefinierten Anzahl von Endbenutzern, die ähnliche Interessen haben;
Registrieren eines Profils eines Pseudo-Endbenutzers, der die Gruppe repräsentiert, mit einem Content-Anbieter der OTT-Anwendung (112);
Übertragen des populären Konsums der Gruppe als Konsum des Pseudo-Endbenutzers; und
Empfangen von Empfehlungen von Content für den Pseudo-Endbenutzer vom Content-Anbieter; wobei besagtes Client-Gerät besagte Empfehlungen von Content durch die OTT-Anwendung anzeigt.

9. Verfahren nach Anspruch 8, wobei das Verfahren weiterhin umfasst:
Empfangen der Gruppenidentität, id, der Gruppe der vordefinierten Anzahl von Endbenutzern, die ähnliche Interessen haben; und
Bestimmen des populären Content, der von der Gruppe konsumiert wird.

10. Verfahren nach Anspruch 8, wobei das Verfahren weiterhin umfasst das Erzeugen des Profils des Pseudo-Endbenutzers, der die Gruppe repräsentiert.

## Revendications

1. Système de protection de la confidentialité (100) comprenant un système d'intergiciel de protection de la confidentialité, PPM, (104) et au moins un dispositif client (102), pour la protection de la confidentialité d'utilisateurs finaux dans des services de recommandation en ligne, le système PPM (104) comprenant :
un processeur (108-2) ;
un module d'émulation par contournement, OTT, (132), couplé au processeur (108-2), pour :
émuler une application OTT (112) utilisée par un groupe d'un nombre prédéfini d'utilisateurs finaux ayant des intérêts similaires ;
enregistrer un profil d'un pseudo utilisateur final, qui représente le groupe, avec un fournisseur de contenu de l'application OTT (112) ; et
transmettre la consommation populaire du groupe en tant que consommation du pseudo utilisateur final ; et
un module relais de recommandation (136), couplé au processeur (108-2), pour recevoir des recommandations de contenu, pour le pseudo utilisateur final, à partir du fournisseur de contenu ; dans lequel
ledit dispositif client affiche lesdites recommandations de contenu par l'intermédiaire de l'application OTT (112).

2. Système de protection de la confidentialité (100) selon la revendication 1, dans lequel le système PPM (104) comprend en outre un module d'agrégation PPM (140), couplé au processeur (108-2), pour recevoir une identité de groupe, id, de réception du groupe du nombre prédéfini d'utilisateurs finaux ayant des intérêts similaires.

3. Système de protection de la confidentialité (100) selon la revendication 2, dans lequel le système PPM (104) comprend en outre un module d'extraction de contenu populaire (138), couplé au processeur (108-2), pour déterminer le contenu populaire consommé par le groupe.

4. Système de protection de la confidentialité (100) selon la revendication 2, dans lequel le système PPM (104) comprend en outre un module de génération de profil de groupe (134), couplé au processeur (108-2), pour générer le profil du pseudo utilisateur final qui représente le groupe.

5. Système de protection de la confidentialité (100) selon la revendication 1, dans lequel l'au moins un dispositif client (102) comprend
un processeur (108-1) ;
un module d'interception OTT (114), couplé au processeur (108-1), pour
intercepter des données envoyées par l'application OTT (112) au fournisseur de contenu ; et
filtrer les données interceptées comme des données transmises à travers des requêtes POST de protocole de transfert hypertexte (HTTP) et comme des données transmises à travers des requêtes GET HTTP.

6. Système de protection de la confidentialité (100) selon la revendication 5, dans lequel l'au moins un dispositif client (102) comprend en outre un module d'extraction de contenu public (114), couplé au processeur (108-1), pour :
obtenir les données transmises par l'intermédiaire de requêtes GET HTTP ;
analyser les données obtenues pour déterminer un contenu disponible publiquement ;
récupérer le contenu disponible publiquement ;
balayer le contenu disponible publiquement récupéré pour éliminer des traqueurs ; et
pousser le contenu disponible publiquement balayé vers l'application OTT (112) pour qu'il soit affiché à l'attention de l'utilisateur final.

7. Système de protection de la confidentialité (100) selon la revendication 5, dans lequel l'au moins un dispositif client (102) comprend en outre un module d'extraction de recommandation (120), couplé au processeur (108-1), pour :
extraire des recommandations générées par le fournisseur de contenu à partir du système PPM (104) ; et
pousser les recommandations vers l'application OTT (112) pour qu'elles soient affichées à l'attention de l'utilisateur final.

8. Procédé de protection de la confidentialité d'utilisateurs finaux dans des services de recommandation en ligne, comprenant les étapes suivantes :
émuler une application par contournement, OTT, (112) utilisée par un groupe d'un nombre prédéfini d'utilisateurs finaux ayant des intérêts similaires ;
enregistrer un profil d'un pseudo utilisateur final, qui représente le groupe, avec un fournisseur de contenu de l'application OTT (112) ;
transmettre la consommation populaire du groupe en tant que consommation du pseudo utilisateur final ; et
recevoir des recommandations de contenu, pour le pseudo utilisateur final, à partir du fournisseur de contenu ; dans lequel :
ledit dispositif client affiche lesdites recommandations de contenu par l'intermédiaire de l'application OTT.

9. Procédé selon la revendication 8, le procédé comprenant en outre les étapes suivantes :
recevoir une identité de groupe, id, du groupe du nombre prédéfini d'utilisateurs finaux ayant des intérêts similaires ; et
déterminer le contenu populaire consommé par le groupe.

10. Procédé selon la revendication 8, le procédé comprenant en outre la génération du profil du pseudo utilisateur final qui représente le groupe.
